# EUROPÄISCHE PATENTANMELDUNG

(11) **EP 2 040 495 A1**
(43) Veröffentlichungstag der Anmeldung: **25.03.2009**
(21) Anmeldenummer: 08105361.3
(22) Anmeldetag: 17.09.2008
(51) Int. Cl.: H04W 8/00

(54) **Verfahren und Vorrichtung zur Zuordnung eines ersten Fahrzeugs zu einem zweiten Fahrzeug**

(30) Priorität: 18.09.2007 DE 102007044395
(71) Anmelder: Continental Automotive GmbH, 30165 Hannover (DE)
(72) Erfinder: Vretska, Robert, 1130, Wien (AT); Schneider, Herbert, 2051, Zellerndorf (AT); Tschofen, Robert, 1140, Wien (AT)

(57) **Zusammenfassung**

Die Erfindung betrifft ein Verfahren zur Zuordnung eines ersten Fahrzeugs (1) zu einem zweiten Fahrzeug (2) mittels Austausch von elektromagnetischen Signalen (3) mit den folgenden Verfahrensschritten:
- Aussendung von elektromagnetischen Signalen (3) von dem ersten Fahrzeug (1), wobei die elektromagnetischen Signale in einem vorgegebenen zeitlichen Signalmuster (10) gesendet werden,
- Empfang der von dem ersten Fahrzeug (1) ausgesendeten elektromagnetischen Signale (3) durch das zweite Fahrzeug (2),
- Vergleich im zweiten Fahrzeug (2), ob die empfangenen elektromagnetischen Signale (3) mit einem im zweiten Fahrzeug (2) hinterlegten Signalmuster übereinstimmen.
- Zuordnung des ersten Fahrzeugs (1) in Abhängigkeit von dem Vergleich.

Die vorliegende Erfindung eignet sich besonders für die Zuordnung von Anhängern zu einem Zugfahrzeug.

## Beschreibung

Die Erfindung betrifft ein Verfahren und eine Vorrichtung zur Zuordnung eines ersten Fahrzeugs zu einem zweiten Fahrzeug.

Für den Austausch relevanter Daten zwischen zwei Fahrzeugen, z. B. einem Zugfahrzeug und seinem Anhänger, ist erforderlich, dass zwischen den beiden Fahrzeugen eine eindeutige Zuordnung erfolgt.

Wenn während des Verbindungsaufbaus eines Anhängers mit einem Zugfahrzeug andere Fahrzeuge in unmittelbarer Nähe sind, besteht die Gefahr, dass eine Signalverbindung, z.B. mittels einer HF Verbindung, nicht zwischen den angekuppelten Fahrzeugen aufgebaut wird.

Für die Verbindung zwischen Controllern im Zugfahrzeug und am Anhänger wird ein Funksystem verwendet. Für die Akzeptanz soll beim Verbindungsaufbau keine Benutzer-Interaktion notwendig sein.

Der vorliegenden Erfindung liegt daher die Aufgabe zugrunde, einen Weg aufzuzeigen, der eine sichere Signal-Verbindung zwischen einem Kraftfahrzeug und dessen Anhänger ermöglicht.

Diese Aufgabe wird erfindungsgemäß durch ein Verfahren mit den Merkmalen des Anspruchs 1 und eine Vorrichtung mit den Merkmalen des Anspruchs 6 gelöst. Vorteilhafte Aus- und Weiterbildungen, welche einzeln oder in Kombination miteinander eingesetzt werden können, sind Gegenstand der abhängigen Ansprüche.

In einem ersten Aspekt der Erfindung wird ein Verfahren zur Zuordnung eines ersten Fahrzeugs zu einem zweiten Fahrzeug mittels Austausch von elektromagnetischen Signalen mit den folgenden Verfahrensschritten vorgeschlagen:
- Aussendung von elektromagnetischen Signalen von dem ersten Fahrzeug, wobei die elektromagnetischen Signale in einem vorgegebenen zeitlichen Signalmuster gesendet werden,
- Empfang der von dem ersten Fahrzeug ausgesendeten elektromagnetischen Signale durch das zweite Fahrzeug,
- Vergleich im zweiten Fahrzeug, ob die empfangenen elektromagnetischen Signale mit einem im zweiten Fahrzeug hinterlegten Signalmuster übereinstimmen.
- Zuordnung des ersten Fahrzeugs in Abhängigkeit von dem Vergleich

In einer bevorzugten Ausgestaltung der Erfindung findet eine Zuordnung des ersten Fahrzeugs statt, wenn der Vergleich eine Übereinstimmung des empfangenen Signalmusters zu einem im zweiten Fahrzeug hinterlegten Signalmuster ergibt.

In einer weiteren bevorzugten Ausgestaltung der Erfindung findet eine Zuordnung des ersten Fahrzeugs nicht statt, wenn der Vergleich keine Übereinstimmung des empfangenen Signalmusters zu einem im zweiten Fahrzeug hinterlegten Signalmuster ergibt.

Zweckmäßigerweise wird das erfindungsgemäße Verfahren wiederholt wenn keine Zuordnung erfolgt ist.

Es hat sich bewährt, dem zeitlichen Signalmuster eine zeitlich nicht periodische Signalfolge zugrunde zu legen.

Für den Verbindungsaufbau wird ein genauer zeitlicher Ablauf, das sogenannte Timing, definiert. Dabei wird ausgenutzt, dass der genaue Zeitpunkt des Ankoppelns des Anhängers an das Zugfahrzeug nur den beiden relevanten Fahrzeugen bekannt ist. Dadurch wird gewährleistet, dass die Verbindung ausschließlich zwischen den beiden angekuppelten Fahrzeugen aufgebaut werden kann.

Während des Verbindungsaufbaus hat ein Fahrzeug die Rolle des Servers, der auf den Verbindungsaufbau wartet, und ein Fahrzeug die Rolle des Clients, der den Verbindungsaufbau initiiert. Wenn die zwei Fahrzeuge angekuppelt werden, erlaubt der Server für eine bestimmte Zeit den Verbindungsaufbau. Der Client versucht sofort nach dem Ankuppeln die Verbindung aufzubauen.

Für den Verbindungsaufbau wird nun vom Zeitpunkt 0 des Ankuppelns weg ein genaues Zeitmuster definiert, das nur vom eigenen Client eingehalten werden kann.

In einem zweiten Aspekt der Erfindung wird eine Vorrichtung zur Zuordnung eines Objekts zu einem Fahrzeug mittels Austausch von elektromagnetischen Signalen vorgeschlagen, wobei die Vorrichtung
- eine fahrzeugseitige Kommunikationseinrichtung umfasst, bei der Mittel zum Empfang von dem Objekt aussendeten elektromagnetischen Signalen in Form eines Signalmusters ausgebildet sind, und
- ein fahrzeugseitiges Steuergerät umfasst, dem das Signalmuster zuführbar ist, und bei dem Mittel ausgebildet sind, die zum Vergleich eines hinterlegten Signalmusters mit dem zuführbaren Signalmuster ausgebildet sind, wobei in Abhängigkeit des Vergleichs das Objekt zuordenbar ist.

Weitere Einzelheiten und Vorteile der Erfindung werden in Bezugnahme auf die beigefügte Abbildung erläutert.

Darin zeigen schematisch:
- Fig. 1: wesentliche Komponenten für die Kommunikation zwischen zwei Fahrzeugen; und
- Fig. 2: ein beispielhaftes Signalmuster.

Bei der nachfolgenden Beschreibung einer bevorzugten Ausführungsform der vorliegenden Erfindung bezeichnen gleiche Bezugszeichen gleiche oder vergleichbare Komponenten.

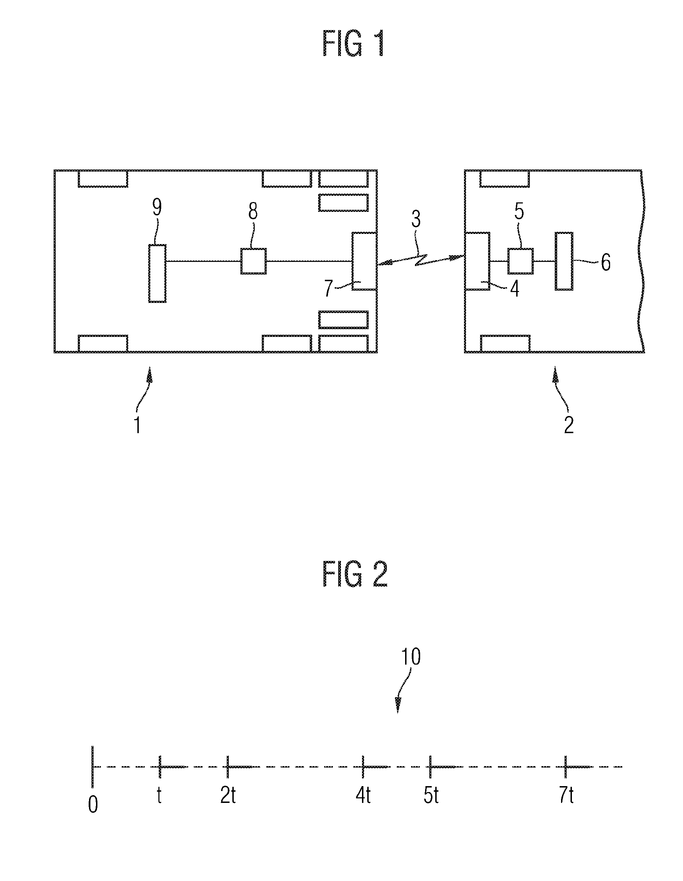

Figur 1 zeigt zwei Fahrzeuge 1 und 2, die mit Hilfe elektronischer Mittel eindeutig einander zugeordnet werden sollen. Die jeweiligen Kommunikationsempfänger 4, 7 für Fahrzeug 1, 2 steuern den Signalaustausch mittels elektromagnetischer Signale 3, typischerweise Hochfrequenz-Signale 3. Die Kommunikationsempfänger 4, 7 werden entsprechend von je einem Steuergerät 6, 9 über einen je einen CAN-Bus 5, 8 angesteuert.

Figur 2 zeigt ein beispielhaftes Signalmuster 10 einer zeitlichen Abfolge von Signalen 3, das für den Austausch zwischen den Fahrzeugen 1, 2 vorgegeben ist.

Am Beispiel eines Ankuppelvorgangs zwischen einem Anhänger, z.B. dem Fahrzeug 2 und einem Zugfahrzeug, z.B. dem Fahrzeug 1 wird der Austausch von Signalen 3 zur Erkennung des Fahrzeugs 2 vom Fahrzeug 1 im Folgenden dargelegt. Vom Zeitpunkt 0 des Ankuppelns weg sendet, ausgehend von einem Kommunikationsempfänger 4 im Fahrzeug 2, eine Antenne Hochfrequenz-Signale 3 in Form von Verbindungsaufbau-Meldungen zu den Zeitpunkten 1, 2t, 4t, 5t und 7t an den Kommunikationsempfänger 7 in Fahrzeug 1. Die Signale 3, die der Kommunikationsempfänger 7 in Fahrzeug 1 empfangen hat, werden im Folgenden an ein fahrzeugseitiges Steuergerät 9 weitergeleitet. Die Kommunikationen zwischen dem Steuergerät 6 und dem Kommunikationsempfänger 4, sowie dem Steuergerät 9 und dem Kommunikationsempfänger 7 erfolgen üblicherweise über einen entsprechenden CAN-Bus 5, 8. Im Steuergerät 9 werden die empfangen Signale 3 hinsichtlich ihres zeitlichen Eintreffens analysiert. Werden im Fahrzeug 1 nun von einem Fahrzeug z. B. periodische Verbindungsaufbau-Meldungen mit der Periode t erkannt, so wird keine Zuordnung stattfinden, da zu den Zeitpunkten 3t und 6t im vorgegebenen Signalmuster 10 keine Signale 3 erwartet werden. Falls durch Verbindungsstörungen einige Meldungen des angekuppelten Fahrzeugs 2 verloren gehen, kann noch immer aufgrund der empfangenen Meldungen eine hinreichend sichere Aussage über die Verbindung gemacht werden.

Der Verbindungsaufbau ist dann erfolgreich abgeschlossen, wenn zum Zeitpunkt 7t zum Beispiel 3 Meldungen synchron empfangen wurden, sonst wird ein neuer Verbindungsaufbau nach dem gleichen Raster initiiert.

Bei erfindungsgemäßer Anwendung ist keinerlei Interaktion des Benutzers (Fahrers) zur Verbindungsherstellung von Zugfahrzeug und Anhänger notwenig. Trotzdem ist gewährleistet, dass die Verbindung nur zwischen den angekuppelten Fahrzeugen hergestellt werden kann und Fehlverbindungen ausgeschlossen werden können.

Bei der Definition des Timings ist wichtig, dass eine möglichst geringe Korrelation zu anderen Funkverbindungen gewährleistet wird.

Die erfindungsgemäße Ausführung erlaubt eine kostengünstige und dennoch sichere drahtlose Zuordnung von einem Anhänger zu einem Zugfahrzeug.

Darüber hinaus sind keine zusätzlichen Komponenten in den Sende- und Empfangseinrichtungen notwendig.

Die vorliegende Erfindung eignet sich besonders für die Zuordnung von Anhängern zu einem Zugfahrzeug.

## Patentansprüche

1. Verfahren zur Zuordnung eines ersten Fahrzeugs (1) zu einem zweiten Fahrzeug (2) mittels Austausch von elektromagnetischen Signalen (3) mit den folgenden Verfahrensschritten:
- Aussendung von elektromagnetischen Signalen (3) von dem ersten Fahrzeug (1), wobei die elektromagnetischen Signale (3) in einem vorgegebenen zeitlichen Signalmuster (10) gesendet werden,
- Empfang der von dem ersten Fahrzeug (1) ausgesendeten elektromagnetischen Signale (3) durch das zweite Fahrzeug (2),
- Vergleich im zweiten Fahrzeug (2), ob die empfangenen elektromagnetischen Signale (3) mit einem im zweiten Fahrzeug (2) hinterlegten Signalmuster (10) übereinstimmen.
- Zuordnung des ersten Fahrzeugs (1) in Abhängigkeit von dem Vergleich.

2. Verfahren nach Anspruch 1, wobei eine Zuordnung des ersten Fahrzeugs (1) stattfindet, wenn der Vergleich eine Übereinstimmung des empfangenen Signalmusters (10) zu einem im zweiten Fahrzeug (2) hinterlegten Signalmuster (10) ergibt.

3. Verfahren nach Anspruch 1, wobei eine Zuordnung des ersten Fahrzeugs (1) nicht stattfindet, wenn der Vergleich keine Übereinstimmung des empfangenen Signalmusters (10) zu einem im zweiten Fahrzeug (2) hinterlegten Signalmuster (10) ergibt.

4. Verfahren nach Anspruch 3, wobei das Verfahren nach Anspruch 1 wiederholt wird.

5. Verfahren nach Anspruch 1 bis 4, wobei das zeitliche Signalmuster (10) zeitlich nicht periodisch ist.

6. Vorrichtung zur Zuordnung eines Objekts zu einem Fahrzeug (2) mittels Austausch von elektromagnetischen Signalen (3), **dadurch gekennzeichnet, dass** die Vorrichtung
- eine fahrzeugseitige Kommunikationseinrichtung umfasst, bei der Mittel zum Empfang von dem Objekt aussendeten elektromagnetischen Signalen (3) in Form eines Signalmusters (10) ausgebildet sind, und
- ein fahrzeugseitiges Steuergerät (9) umfasst, dem das Signalmuster (10) zuführbar ist, und bei dem Mittel ausgebildet sind, die zum Vergleich eines hinterlegten Signalmusters (10) mit dem zuführbaren Signalmuster (10) ausgebildet sind, wobei in Abhängigkeit des Vergleichs das Objekt zuordenbar ist.
